# EUROPEAN PATENT SPECIFICATION

(11) **EP 2 642 284 B1**
(45) Date of publication and mention of the grant of the patent: **26.10.2022**
(21) Application number: 10859711.3
(22) Date of filing: 21.12.2010
(51) Int. Cl.: G01N 29/09, G01N 29/04, G01N 29/22, G01N 29/265

(54) **AUTOMATIC ULTRASONIC DETECTION DEVICE FOR RAILS**
AUTOMATISCHE ULTRASCHALLDETEKTIONSVORRICHTUNG FÜR SCHIENEN
DISPOSITIF DE DÉTECTION AUTOMATIQUE PAR ULTRASONS POUR RAILS

(30) Priority: 18.11.2010 KR 20100115112
(43) Date of publication of application: 25.09.2013
(73) Proprietor: Korea Railroad Research Institute, Uiwang-city, Gyeonggi-do 437-050 (KR)
(72) Inventor: MUN, Hyung-Suk, Seoul, 03009 (KR); KWON, Tae-Soo, Gyeonggi-do 443-707 (KR); SEO, Sung-Il, Seoul 138-240 (KR); JOYCE, Rob, Dwyer, Sheffield, South Yorkshire SI 3JD (GB)
(74) Representative: Petraz, Gilberto Luigi
(86) International application number: PCT/KR2010/009171
(87) International publication number: WO 2012/067302

(56) References cited:
- GB-A- 2 314 110
- JP-A- 7 020 106
- JP-A- 9 089 848
- JP-A- 11 142 134
- JP-A- 2006 017 480
- KR-A- 20100 110 373
- KR-B1- 100 904 120
- US-A- 4 468 966

## Description

### Technical Field

The present invention relates to an automatic ultrasonic detection device for rails, and in particular to an automatic ultrasonic detection device for rails which makes it possible to inspect any cracks in a welded portion connecting neighboring rails as it automatically operates along the rails and to maintain a parked state between the rails when the welded portion is not inspected.

### Background Art

The rail for trains is generally manufactured in a long shape by a rolling mill, and the manufactured rail is cut with a length of 20-25m, and the cut rails are installed through a rail installation procedure for the train to run along the rails.

At this time, when the rails are installed, a plurality of rails are connected by welding the neighboring rails, so the rails can be extended endlessly for the trail to run along the rails.

When the rains repeatedly run along the rails, cracks may occur at the welded portions connecting the neighboring rails due to repeated stresses.

So, it is necessary to frequently inspect the cracks in the connection portion connecting the neighboring installed rails, namely, the welded portions for the purpose of checking the cracks. If a cracked portion is inspected, the cracked portion is repaired through a maintenance work for the trains to run in safe.

In addition, the inspection of the cracks at the welded portions of the rails is generally performed during the nights when the trains don't run.

As a method for inspecting the welded portions between the rails, a worker rides on a vehicle which runs along the lines and inspects the occurrence of the cracks using a probe at the welded portions while he moves. A known railroad track inspection car is described for example in US-A-4468966. Another known railway track inspection apparatus is described in GB-A-2314110.

According to the conventional inspection method in which the cracks at the welded portions are inspected while the worker moves along the rails on an inspection vehicle, the inspection vehicle must be stored in a garage so as not to interfere with the operations of the trains which are scheduled to run at the day time, which consequently makes problems.

In addition, the cracks are inspected by the worker while he moves along the lines on the inspection vehicle, more workers are needed, and more work time are inevitably consumed.

### Disclosure of Invention

Accordingly, the present invention is made to improve the above mentioned problems encountered in the conventional art and other problems. It is an object of the present invention to provide an automatic ultrasonic detection device for rails which has features in that costs for workers can be saved because workers are not needed for the sake of inspections of the cracks of the welded portions connecting neighboring rails in such way to inspect the cracks and transfer data on the cracks while a detection device runs in an unmanned way along the rails installed at each line.

It is another object of the present invention to provide an automatic ultrasonic detection device for rails which makes it possible not to interfere with the operations of the trains which run along the lines in such a way that the detection device is parked on the rails installed to correspond to the lines when the detection device does not inspect the cracks of the welded portions of the rails.

It is further another object of the present invention to provide an automatic ultrasonic detection device for rails which makes it possible to inspect the cracks in such a way that an inspection device runs in safe without departing from the lines when inspecting the cracks in the welded portion by providing a support part which is installed at both sides and front and rear sides of a body for the purpose of supporting the inner sides of the rails.

It is further another object of the present invention to provide an automatic ultrasonic detection device for rails which can operate in safe without any interferences in such a way that a probe part is configured to be contractible from the body and is positioned at a welded portion of the rails, and an ultrasonic fixing member is drawn and inspects the cracks and returns to its original position after finishing the inspections.

Meanwhile, it is further another object of the present invention to provide an automatic ultrasonic detection device for rails which can operate with the aid of a driving force obtained by way of a self-charging method by providing a solar cell at the top.

To achieve the above objects, there is provided an automatic ultrasonic detection device for rails, comprising a body part; a wheel part installed at both sides of the body part; an operation part which is installed in the body part and activates the wheel part; and a driving force transfer part transferring a driving force to the operation part.

Here, the body part comprises a plate shaped body which is spaced apart from the ground; a housing which is installed at the top of the body and is divided by a partition and is formed of first and second installation compartments formed at front and rear ends for installing the operation part and the driving force transfer part, and a third installation compartment formed between the first and second installation compartments for the installation of an ultrasonic probe; and a cover member covering the first, second and third installation compartments of the housing. The body part further comprises a support part supported by the rails. The support part comprises a screw shaft which is provided in each of the first and second installation compartments formed in the housing of the body part, each screw shaft having a first driven gear at its center portion and threads each formed in different directions at both sides about its center portion; a slide member which is thread fixed at both sides of each screw shaft and has a long groove in a longitudinal direction, the housing including a protrusion which is engaged to the long groove; a guide roller which is fixedly engaged at an outer circumferential surface of an end portion of each slide member; and for each screw shaft a first motor to the motor shaft of which is fixedly engaged a driving gear engaged with the first driven gear.

In addition, in the third installation compartment is provided a scan part scanning a welded portion connecting rails.

Here, the scan part comprises a guide pipe installed in a pair at both sides of an inner surface of the third installation compartment and having a cut-away hole formed at its lower side; a rack which is engaged at an inner side of the guide pipe and protrudes from the outer side of the housing, and a scan member is provided at an end portion of the rack positioned at the outer side of the housing; and a second motor which is positioned in the cut-away holed formed at the lower side of the guide pipe and has a motor shaft to which a pinion engaged with the rack is fixedly engaged.

In addition, the wheel part comprises a front wheel shaft which protrudes in both side directions after it passes through the first installation compartment formed in the housing of the body part and has a first cooperating gear for a position in the first installation compartment; a first sprocket segment installed at an end portion of both sides of the front wheel shaft; a rear wheel shaft which protrudes in both side directions after it passes through a second installation compartment formed in the housing of the body part and has a second cooperating gear for an installation in the second installation compartment; a second sprocket segment installed at an end portion of both sides of the rear wheel shaft; and an endless track connecting the first sprocket segment and the second sprocket segment.

Here, a frame is provided at an outer side portion of each of the first and second sprocket segments, and at the top and lower portions of the frame are provided a plurality of assistant rollers supporting the inner side surfaces of the endless track.

In addition, the operation part comprises first and second driving shafts which are provided in the first and second installation compartments of the body part as they are perpendicular to the top of each of the front wheel shaft and the rear wheel shaft of the wheel part and which have second and third driven gears engaged with the first and second cooperating gears; and first and second driven bevel gears which are provided at the first and second driving shafts and are spaced apart from the second and third driven gears.

In addition, the driving force transfer part comprises third and fourth motors which are installed in the first and second installation compartments of the body part; and first and second driving bevel gears which are fixedly engaged to the motor shafts of the third and fourth motors and are engaged with the first and second driven bevel gears provided in the first and second driving shafts of the operation part.

In addition, a mounting hole is formed at an end portion of the slide member, and an elastic member is mounted in the mounting hole, and a ball is mounted at a front side of the elastic member, and a fixing plate is configured to cover the mounting hole of the slide member and to fixedly engage for the ball to protruded outwards.

In addition, the body part further comprises a solar power generation part, and the solar power generation part comprises a solar cell plate provided at the top of the cover member provided at the top of the housing of the body; a storage battery which is installed in both the first and second installation compartments of the housing or is installed in either the first installation compartment or the second installation compartment; and a charging module which is installed in both the first and second installation compartments of the housing or is installed in either the first installation compartment or the second installation compartment.

In addition, the body of the body part is prolonged in forward and backward directions, and a slope plate is installed at the top of the prolonged body.

### Advantageous Effects

The present invention has effects in that costs for workers can be saved because workers are not needed for the sake of inspections of the cracks of the welded portions connecting neighboring rails in such way to inspect the cracks and transfer data on the cracks while a detection device runs in an unmanned way along the rails installed at each line.

In addition, the present invention makes it possible not to interfere with the operations of the trains which run along the lines in such a way that the detection device is parked on the rails installed to correspond to the lines when the detection device does not inspect the cracks of the welded portions of the rails.

In addition, the present invention makes it possible to inspect the cracks in such a way that an inspection device runs in safe without departing from the lines when inspecting the cracks in the welded portion by providing a support part which is installed at both sides and front and rear sides of a body for the purpose of supporting the inner sides of the rails.

In addition, the automatic ultrasonic detection device for rails can operate in safe without any interferences in such a way that a probe part is configured to be contractible from the body and is positioned at a welded portion of the rails, and an ultrasonic fixing member is drawn and inspects the cracks and returns to its original position after finishing the inspections.

Meanwhile, the automatic ultrasonic detection device for rails can operate with the aid of a driving force obtained by way of a self-charging method by providing a solar cell at the top.

### Brief Description of Drawings

Figure 1 is a perspective view illustrating an automatic ultrasonic detection device for rails according to the present invention.
Figure 2 is a cross sectional view illustrating an automatic ultrasonic detection device for rails according to the present invention.
Figure 3 is a plane view illustrating an automatic ultrasonic detection device for rails according to the present invention.
Figure 4 is a view illustrating a scan part of the present invention.
Figure 5 is a view illustrating a wheel part of the present invention.
Figure 6 is a view illustrating an operation part and a driving force transfer part of the present invention.
Figure 7 is a view illustrating a support part of the present invention.
Figure 8 is a plane view illustrating an operation relationship of an automatic ultrasonic detection device for rails of the present invention while showing a state that a support part is supported as it comes into contact with a welded portion.
Figure 9 is a view illustrating an operation relationship of an automatic ultrasonic detection device for rails of the present invention while showing a state that a support part is supported as it comes into contact with a welded portion.
Figure 10 is a view illustrating an operation relationship of an automatic ultrasonic detection device for rails of the present invention while showing a state that a scan member is drawn to a welding part of a rail.
Figure 11 is a view illustrating an automatic ultrasonic detection device for rails according to another embodiment of the present invention.

### Best modes for carrying out the invention

The automatic ultrasonic detection device for rails will be described according to a preferred embodiment of the present invention with reference to the accompanying drawings.

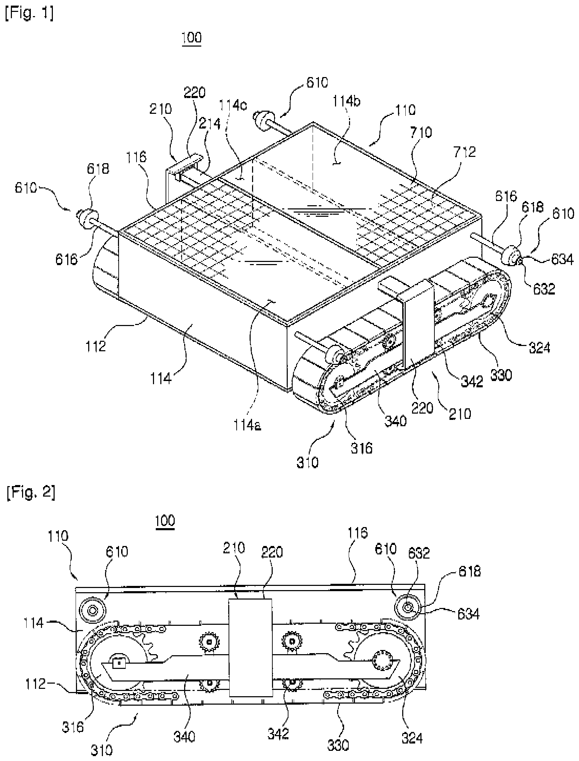

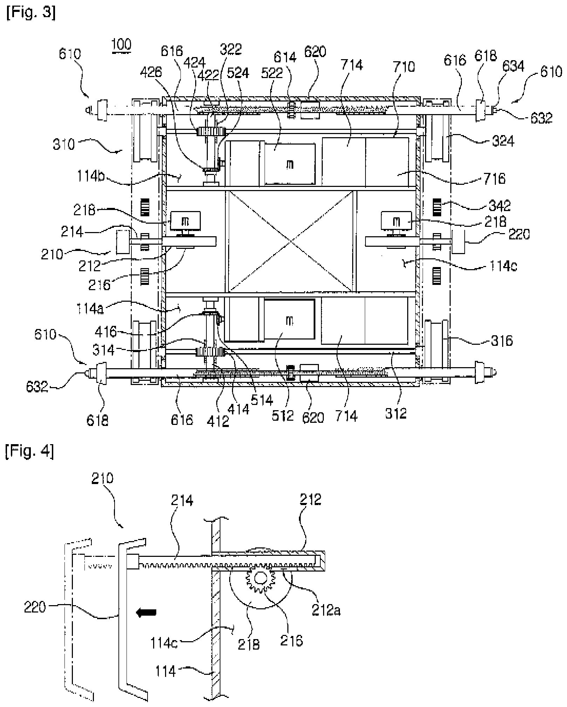

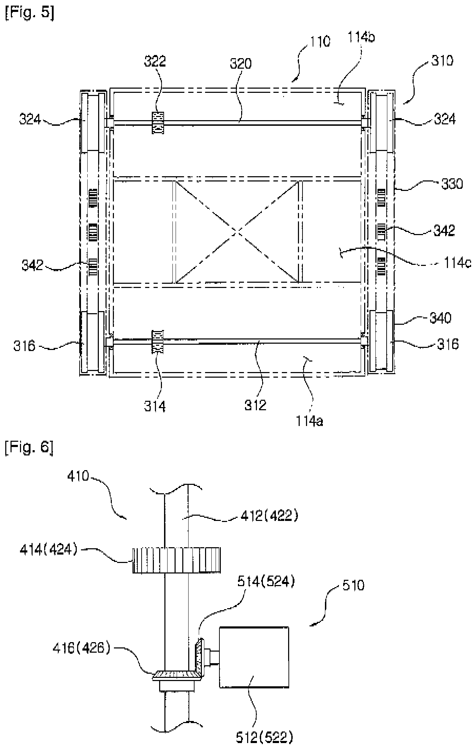

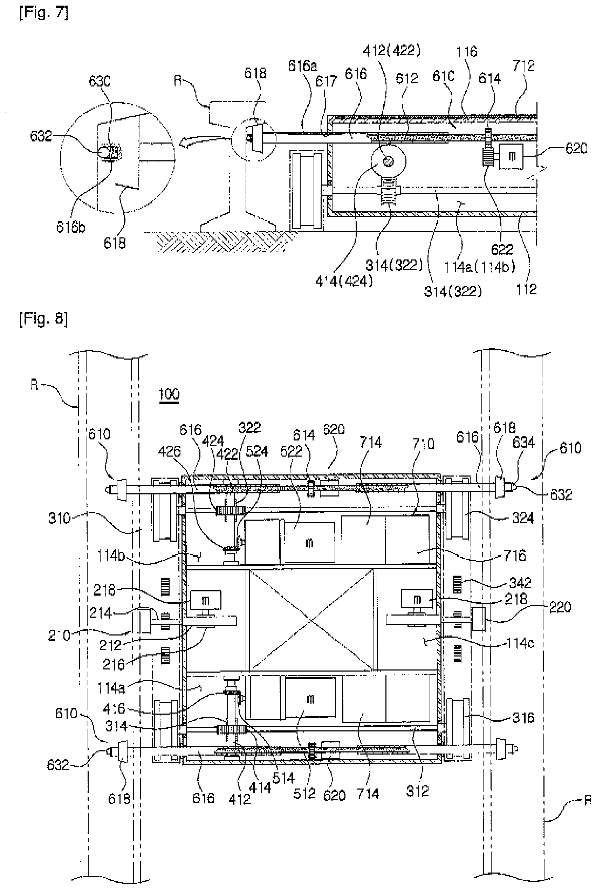

Figure 1 is a perspective view illustrating an automatic ultrasonic detection device for rails according to the present invention. Figure 2 is a cross sectional view illustrating an automatic ultrasonic detection device for rails according to the present invention. Figure 3 is a plane view illustrating an automatic ultrasonic detection device for rails according to the present invention. Figure 4 is a view illustrating a scan part of the present invention. Figure 5 is a view illustrating a wheel part of the present invention. Figure 6 is a view illustrating an operation part and a driving force transfer part of the present invention. Figure 7 is a view illustrating a support part of the present invention.

As shown in Figures 1 to 7, the automatic ultrasonic detection device 100 for rails according to the present invention comprises a body part 110 spaced apart from the ground.

Here, the body part 110 comprises a plate-shaped body 112, and a the top of the body 112 is provided a rectangular housing 114.

At this time, the housing 114 is partitioned into pieces by a plurality of partitions, thus forming first, second and third installation compartments 114a, 114b and 114c.

There is provided a cover member 116 covering the tops of the first, second and third installation compartments 114a, 114b and 114c formed in the housing 114.

At the center portion of the housing 114, namely, in the third installation compartment 114c formed between the first and second installation compartments 114a and 114b is installed an ultrasonic probe (not shown).

In the third installation compartment 114c of the housing 114 is provided a scan part 210 scanning the welded portions connecting neighboring rails R.

Here, the scan part 210 is provided in such a way to correspond to the inner surface of the third installation compartment 114c, a cut-away hole 212a being formed at its lower side, and a guide pipe 212 is fixed at the housing 114.

At this time, there is provided a rack 214 which is inserted in the inner side of the guide tube 212, one side of the rack being protruded from the outer side of the housing 114 and being movably engaged. At the end portion of the rack 214 which is protruded from the outer side of the housing 114 is provided a scan member 220 configured to scan the welded portions connecting the neighboring rails R.

There is further provided a second motor 218 to the motor shaft of which is engaged a pinion 216 engaged with the rack 214 by way of the cut-away hole 212a formed at the lower side of the guide pipe 212.

Therefore, the pinion 216 fixedly engaged at the motor shaft rotates by the operation of the second motor 218, and at the same time the rack 214 draws toward the outer side of the housing 114, and the scan member 220 provided at the end portion of the rack 214 approaches the welded portion connecting the neighboring rails R or comes into contact with the same. At the time the scan member 220 comes into contact with the welded portion, ultrasonic waves are emitted, thus scanning the welded portion.

There is provided a wheel part 310 for the sake of operation as it is installed at both sides of the body part 110.

Here, the wheel part 310 comprises a front wheel shaft 312 which passes through the first installation compartment 114a of the housing 114 in the widthwise direction, both sides of the front wheel shaft being exposed to the outside. The front wheel shaft 312 comprises a first cooperating gear 314.

At this time, at the end portions of both sides of the front wheel shaft 313 is provided a first sprocket segment 316.

In the second installation compartment 114b of the housing 114 is provided a rear wheel shaft 320 corresponding to the front wheel shaft 312, and at the rear wheel shaft 320 is provided a second cooperating gear 322, and at the end portions of both sides of the rear wheel shaft 320 is provided a second sprocket segment 324.

At this time, an endless track 330 connects the first sprocket segment 316 and the second sprocket segment 324, respectively.

At one side surface of each of the first and second sprocket segments 316 and 324 is provided a frame 340 supporting the same, and at the upper and lower sides of the frame 340 are provided a plurality of assistant rollers 342 supporting the inner side of the endless track 330.

The operation part 410 is provided in the first and second installation compartments 114a and 114b of the housing 114 for the purpose of operating the front wheel shaft 312 and the rear wheel shaft 320.

Here, the operation part 410 comprises a first driving shaft 412 which is installed in the first installation compartment 114a and is positioned at the top of the front wheel shaft 312 and is installed perpendicular to the front wheel shaft 312. At the first driving shaft 412 is provided a second driven gear 414 engaged with the first cooperating gear 314. A second driven gear 414 is fixedly engaged with the first driving shaft 412 and is spaced apart from the second driven gear 414.

The operation part 410 comprises a second driving shaft 422 which is installed in the second installation compartment 114b and is positioned at the top of the rear wheel shaft 320 and is installed perpendicular to the rear wheel shaft 320. At the second driving shaft 422 is provided a third driven gear 424 engaged with the second cooperating gear 322. A second driven bevel gear 426 is spaced apart from the third driven gear 424 and is fixedly engaged with the second driving shaft 422.

Therefore, as the first and second driving shafts 412 and 422 rotate, the second and third driven gears 414 and 424 of the first and second driving shafts 412 and 422 rotate, and at the same time the first and second cooperating gears 314 and 333 engaged with the second and third driven gears 414 and 424 rotate, and the front and rear wheel shafts 312 and 320 rotate, so the automatic ultrasonic detection device 100 for rails moves back and forth.

A driving transfer part 510 is provided in the first and second installation compartments 114a and 114b of the housing 114 of the body part 110 for transferring driving force for the operation part 410 to stop.

Here, the driving force transfer part 510 comprises a third motor 512 which is installed in the first installation compartment 114a of the housing 114 and to which a first driving bevel gear 514 engaged with the first driven bevel gear 414, at the motor shaft of which the first driving shaft 412 is provided, is fixedly engaged, for thereby transferring driving force.

In the second installation compartment 114b of the housing 114 is installed a fourth motor 522 to which a second driving bevel gear 524 engaged with the second driven bevel gear 424, at the motor shaft of which is installed the second driving shaft 422, is fixedly engaged, for thereby transferring driving force.

As the third and fourth motors 512 and 522 start operating, the first and second driving gears 514 and 524 provided at the motor shaft rotate, and the first and second driven bevel gears 416 and 426 engaged with the first and second driving bevel gears 514 and 524 rotate, and the first and second driving shafts 412 and 422 rotate, and the front wheel shaft 312 and the rear wheel shaft 320 rotate by means of the rotations of the first and second driving shafts 412 and 422.

In the first and second installation compartment 114a and 114b of the housing 114 is provided a support part 610 which is supported by the inner side of the rail R for the automatic ultrasonic detection device 100 for rails to run in safe.

At this time, the support part 610 is installed in a pair disposed opposite at both sides of the first installation compartment 114a of the housing 114, and in the second installation compartment 114b, it is installed corresponding to the support part 610 installed in the first installation compartment 114a.

The support part 610 is provided in each of the first and second installation compartments 114a and 114b of the housing 114, and at the center is provided at a third driven gear 614. The support part 610 comprises a screw shaft 612 with threads being opposite about the center.

A slide member 616 is thread engaged at both sides of the screw shaft 612 and is fixedly engaged for itself to protrude to the outside of the housing 114 and has a long groove 616a in an outer circumference direction.

A protrusion 617 is provided in the housing 114 for the purpose of preventing rotation of the side member 616 when it slides as it is engaged to the long groove 616a formed at the outer circumferential surface of the slide member 616.

There is provided a guide roller 618 which is engaged to an outer circumferential surface of the end portion of the slide member 61 and is supported by the rail R.

There is provided a first motor 620 at the motor shaft of which is fixedly engaged the driving gear 622 engaging with the first driven gear 614 provided at the center of the screw shaft 612.

In the above described constructions, as the screw shaft 612 rotates upon the operation of the first motor 620, the slide member 615 slides, and the slide member 616 is drawn during the operation of the automatic ultrasonic detection device 100 for rails, and it runs in a state that the guide roller 618 comes into contact with the rail R and runs in safe with a constant interval from the rail R.

At an end portion of the slide member 616 is provided a mounting hole 616b, and an elastic member 630 is mounted in the mounting hole 616b, and at a front side of the elastic member 630 is mounted a ball 632.

There is provided a fixing pin 634 which covers the mounting hole 616b of the slide member 616 and is fixed at the slide member 616 by a fixing means such as a bolt, etc. for the ball 632 to expose to the outside.

During the operation of the automatic ultrasonic detection device 100 for rails, the slide member 616 draws from the housing 114, and as soon as the guide roller 618 comes into contact with the rail R, the ball 632 operates as it contacts with the inner side surface of the rail R, so it can run with a certain interval from the rail R, and when passing past the welded portion of the rails R, the ball 632 pressurizes the elastic member 630 and inserts the same into the mounting hole 616b. After it passed, it returns to its original position with the aid of the elastic member 630, so the ball 632 can always maintain a contact state with the rail R .

In the body part 110 is provided a solar power generation part 710 by which is generated an electric power for thereby operating the automatic ultrasonic detection device 100 for rails.

The solar power generation part 710 comprises a solar cell plate 712 generating electric power as solar light is incident on the top of the cover member 116 for thereby generating electric current on the basis of photoelectro motive force.

A storage battery 714 is provided in both the first and second installation compartments 114a and 114b of the housing 114 or in at least of the first and second installation compartments 114a and 114b for thereby charging current which generates on the basis of photo-electro motive force as solar light is incident on the solar cell plate 12.

In addition, there is provided a charging module 716 which has features in that when solar light is incident on the solar cell plate 712, the current generates on the basis of photoelectro motive force, and when the generating current reaches a storage limit during the charge of the storage battery 714, it is detected, and the current generating from the solar cell plate 712 is prevented from inputting in the storage battery 714.

Therefore, the electric power supplied to the automatic ultrasonic detection device 100 for rails is used for the sake of self-power generation with solar light and at the same time it is supplied.

The operations of the automatic ultrasonic detection device for rails according to the present invention will be described.

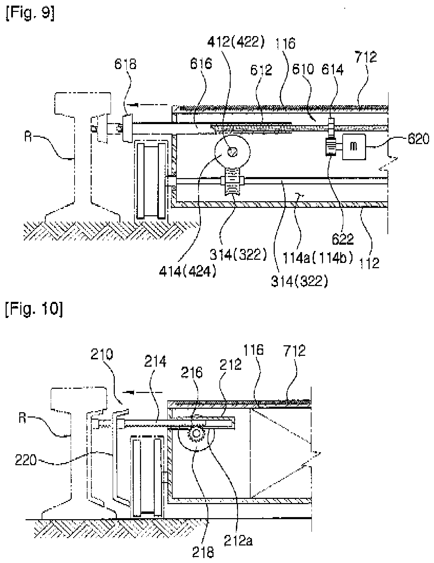

Figure 8 is a plane view illustrating an operation relationship of an automatic ultrasonic detection device for rails of the present invention while showing a state that a support part is supported as it comes into contact with a welded portion. Figure 9 is a view illustrating an operation relationship of an automatic ultrasonic detection device for rails of the present invention while showing a state that a support part is supported as it comes into contact with a welded portion. Figure 10 is a view illustrating an operation relationship of an automatic ultrasonic detection device for rails of the present invention while showing a state that a scan member is drawn to a welding part of a rail.

As shown therein, in the automatic ultrasonic detection device 100 for rails according to the present invention, when the fourth motor 620 of the support part 610 starts operating in a state that it is positioned on the line of the rails R, the screw shaft 612 rotates, and the slide member 616 engaged to both sides of the screw shaft 612 draws toward the outer side of the housing 114, and the guide roller 618 and the ball 62 come into contact with the side portion of the rail R.

In this state, when the third and fourth motors 512 and 522 of the driving force transfer part 510 provided in the first and second installation compartments 114a and 114b of the housing 114 are operated, the first and second driving bevel gears 514 and 524 fixedly engaged at the motor shafts of the third and fourth motors 512 and 522 rotate, and the first and second driven bevel gears 416 and 426 engaged to the first and second driving bevel gears 514 and 524 rotate, so the first and second driving shafts 412 and 422 rotate.

As the first and second shafts 412 and 422 rotate, the first and second cooperating gears 413 and 322 engaged with the second and third driven gears 414 and 424 rotate, so the front wheel shaft 312 and the rear wheel shaft 320 rotate.

As the front wheel shaft 312 and the rear wheel shaft 320 rotate, the first and second sprocket segments 316 and 324 rotate, and the endless track 330 connecting the first and second sprocket segments 316 and 324 rotate.

At this time, the operation direction of the automatic ultrasonic detection device 100 for rails is determined depending on the rotation directions of the third and fourth motors 512 and 522 of the driving force transfer part 510.

Through the above described operations, the automatic ultrasonic detection device 100 for rails runs on the lines between the rails R.

As the automatic ultrasonic detection device 100 for rails, when the scan part 220 is positioned at the side of the welded portion of the neighboring rails R, the automatic ultrasonic detection device 100 for rails stops.

After the automatic ultrasonic detection device 100 for rails stops, when the first motor 218 of the scan part 210 provided in the third installation compartment 114c of the housing 114 is activated, the pinion 216 fixedly engaged to the motor shaft of the second motor 218 rotates, and the rack 214 is drawn to the outside of the housing 114, so the scan member 220 approaches and comes into contact with the welded portion of the rails R,

After the scan part 220 is positioned close to the welded portion of the rails R, ultrasonic waves are emitted, and scan is performed, and the scanned data are transmitted to the central control center through the probe.

The method for emitting ultrasonic waves to the welded portion of the rails R and scanning it and the method for transmitting the scanned data to the central control center are known arts, so the detailed descriptions thereof will be omitted.

After the scan work on the welded portion of the rails R is finished, when the second motor 218 is operated in the reverse direction, the pinion 216 rotates in the reverse direction, and the rack 214 is forced to insert in the inner side of the housing 114, so the scan member 220 departs from the welded portion of the rails R.

In this state, the automatic ultrasonic detection device 100 for rails moves to the next welded portion of the rails R, and starts scanning the welded portion in the same manner as the above.

The welded portions connecting the neighboring rails R are inspected by the above described repeated operations, and a necessary maintenance work is performed, so the train can run in safe.

The automatic ultrasonic detection device 100 for rails generally runs at the night time when the trains don't run, and at the day time when the trains run, the automatic ultrasonic detection device 100 for tails remains stopped between the rails R.

At this time, in a state that the automatic ultrasonic detection device 100 for rails is stopped between the rails R, a safely fixed state is obtained, so the automatic ultrasonic detection device 100 for rails does not agitate from the strong air generating when the train passes by.

In addition, the automatic ultrasonic detection device 100 for rails is configured to generate electricity using solar light when being parked, and the thusly generated electricity is charged in the storage battery 714, and the automatic ultrasonic detection device 100 for rails can run at the night day using the charged electricity so as to inspect the welded portion connecting the neighboring rails R.

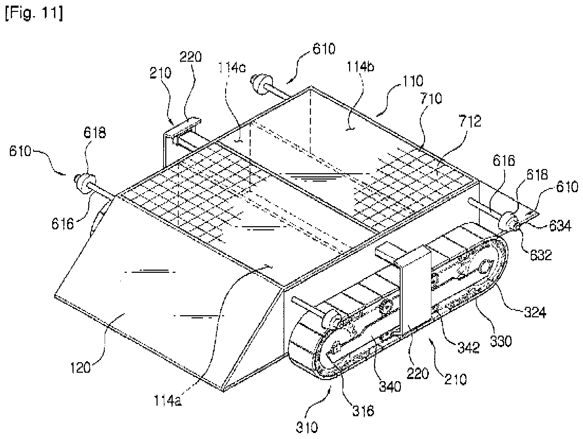

Figure 11 is a view illustrating an automatic ultrasonic detection device for rails according to another embodiment of the present invention.

As shown therein, the front and rear ends of the body 112 are prolonged, and a slope plate 120 is installed at the top of the prolonged body 112.

The operations of the automatic ultrasonic detection device for rails according to the present invention are same as the earlier described operations, so the descriptions thereof will be omitted.

However, since the slope plate 120 is provided at the front and rear ends of the body 112, it is possible to substantially reduce the air resistance generating when the trains pass by in a state that the automatic ultrasonic detection device 100 for rails remains stopped between the rails R, thus preventing the movements of the same, which results in the preventions of part damages.

As the present invention may be embodied in several forms without departing from the essential characteristics thereof, it should also be understood that the above-described examples are not limited by any of the details of the foregoing description, unless otherwise specified, but rather should be construed broadly within its scope as defined in the appended claims, and therefore all changes and modifications that fall within the meets and bounds of the claims are therefore intended to be embraced by the appended claims

### Industrial Applicability

The present invention relates to an automatic ultrasonic detection device for rails, and in particular to an automatic ultrasonic detection device for rails which makes it possible to inspect any cracks in a welded portion connecting neighboring rails as it automatically operates along the rails and to maintain a parked state between the rails when the welded portion is not inspected.

## Claims

1. An automatic ultrasonic detection device (100) for rails, comprising:
a body part (110);
a wheel part (310) installed at both sides of the body part (110);
an operation part (410) which is installed in the body part (110) and activates the wheel part (310); and
a driving force transfer part (510) transferring a driving force to the operation part (410);
**characterized in that** the automatic ultrasonic detection device (100) comprises:
a plate shaped body (112) which is spaced apart from the ground;
a housing (114) which is installed at the top of the body (112) and is divided by a partition and is formed of first and second installation compartments (114a, 114b) formed at front and rear ends for installing the operation part (410) and the driving force transfer part (510), and a third installation compartment (114c) formed between the first and second installation compartments (114a, 114b);
an ultrasonic probe installed in said third installation compartment (114c);
a cover member (116) covering the first, second and third installation compartments (114a, 114b, 114c) of the housing (114);
the body part (110) further comprising a support part (610) supported by the rails, wherein the support part (610) comprises:
a screw shaft (612) which is provided in each of the first and second installation compartments (114a, 114b) formed in the housing (114) of the body part (110), each screw shaft (612) having a first driven gear (614) at its center portion and threads each formed in different directions at both sides about its center portion;
a slide member (616) which is thread fixed at both sides of each screw shaft (612) and has a long groove (616a) in a longitudinal direction, the housing (114) including a protrusion (617) which is engaged to the long groove (616a);
a guide roller (618) which is fixedly engaged at an outer circumferential surface of an end portion of each slide member 616; and for each screw shaft (612) a first motor (620) to the motor shaft of which is fixedly engaged a driving gear (622) engaged with the first driven gear (614).

2. The device of claim 1, where in the third installation compartment (114c) is provided a scan part (210) scanning a welded portion connecting rails.

3. The device of claim 2, wherein the scan part (210) comprises:
a guide pipe (212) installed in a pair at both sides of an inner surface of the third installation compartment (114c) and having a cut-away hole (212a) formed at its lower side;
a rack (214) which is engaged at an inner side of the guide pipe (212) and protrudes from the outer side of the housing (114), and a scan member (220) is provided at an end portion of the rack (214) positioned at the outer side of the housing (114); and
a second motor (218) which is positioned in the cut-away hole (212a) formed at the lower side of the guide pipe (212) and has a motor shaft to which a pinion (216) engaged with the rack (214) is fixedly engaged.

4. The device of claim 1, wherein the wheel part (310) comprises:
a front wheel shaft (312) which protrudes in both side directions after it passes through the first installation compartment (114a) formed in the housing (114) of the body part (110) and has a first cooperating gear (314) for a position in the first installation compartment (114a);
a first sprocket segment (316) installed at an end portion of both sides of the front wheel shaft (312);
a rear wheel shaft (320) which protrudes in both side directions after it passes through a second installation compartment (114b) formed in the housing (114) of the body part (110) and has a second cooperating gear (322) for an installation in the second installation compartment (114b);
a second sprocket segment (324) installed at an end portion of both sides of the rear wheel shaft (320); and
an endless track (330) connecting the first sprocket segment (316) and the second sprocket segment (324).

5. The device of claim 4, wherein a frame (340) is provided at an outer side portion of each of the first and second sprocket segments (316, 324), and at the top and lower portions of the frame (340) are provided a plurality of assistant rollers (342) supporting the inner side surfaces of the endless track (330).

6. The device of claim 1, wherein the operation part (410) comprises:
first and second driving shafts (412, 422) which are provided in the first and second installation compartments (114a, 114b) of the body part (110) as they are perpendicular to the top of each of the front wheel shaft (312) and the rear wheel shaft (320) of the wheel part (310) and which have second and third driven gears (414, 424) engaged with the first and second cooperating gears (314, 322); and
first and second driven bevel gears (416, 426) which are provided at the first and second driving shafts (412, 422) and are spaced apart from the second and third driven gears (414, 424).

7. The device of claim 1, wherein the driving force transfer part (510) comprises:
third and fourth motors (512, 522) which are installed in the first and second installation compartments (114a, 114b) of the body part (110); and
first and second driving bevel gears (514, 524) which are fixedly engaged to the motor shafts of the third and fourth motors (512, 522) and are engaged with the first and second driven bevel gears (416, 426) provided in the first and second driving shafts (412, 422) of the operation part (410).

8. The device of claim 1, wherein a mounting hole (616b) is formed at an end portion of the slide member (616), and an elastic member (630) is mounted in the mounting hole (616b), and a ball (632) is mounted at a front side of the elastic member (630), and a fixing plate (634) is configured to cover the mounting hole (616b) of the slide member (616) and to fixedly engage for the ball (632) to protruded outwards.

9. The device of claim 8, wherein the body part (110) further comprises a solar power generation part (710), and the solar power generation part (710) comprises:
a solar cell plate (712) provided at the top of the cover member (116) provided at the top of the housing (114) of the body part (110);
a storage battery (714) which is installed in both the first and second installation compartments (114a, 114b) of the housing (114) or is installed in either the first installation compartment (114a) or the second installation compartment (114b); and
a charging module (716) which is installed in both the first and second installation compartments (114a, 114b) of the housing (114) or is installed in either the first installation compartment (114a) or the second installation compartment (114b).

10. The device of claim 1, wherein the body (112) of the body part (110) is prolonged in forward and backward directions, and a slope plate (120) is installed at the top of the prolonged body (112).

## Patentansprüche

1. Automatik-Ultraschall-Detektions-Vorrichtung (100) für Schienen, aufweisend:
einen Körperteil (110),
einen Radteil (310), der an beiden Seiten des Körperteils (110) installiert ist,
einen Betriebsteil (410), der in dem Körperteil (110) installiert ist und den Radteil (310) aktiviert, und
einen Antriebskraftübertragungsteil (510), der eine Antriebskraft auf den Betriebsteil (410) überträgt,
**dadurch gekennzeichnet, dass** die Automatik-Ultraschall-Detektions-Vorrichtung (100) aufweist:
einen plattenförmigen Körper (112), der im Abstand vom Boden angeordnet ist,
ein Gehäuse (114), welches an der Oberseite des Körpers (112) installiert ist und mittels einer Abtrennung unterteilt ist und gebildet ist aus einem ersten und einem zweiten Installationsabteil (114a, 114b), die an einem vorderen und einem hinteren Ende ausgebildet sind, zum Installieren des Betriebsteils (410) und des Antriebskraftübertragungsteils (510), und einem dritten Installationsabteil (114c), das zwischen dem ersten und dem zweiten Installationsabteil (114a, 114b) gebildet ist,
eine Ultraschallsonde, die in dem besagten dritten Installationsabteil (114c) installiert ist,
ein Abdeckelement (116), welches das erste, das zweite und das dritte Installationsabteil (114a, 114b, 114c) des Gehäuses (114) abdeckt,
wobei der Körperteil (110) ferner einen Halteteil (610) aufweist, der von den Schienen gehalten ist, wobei der Halteteil (610) aufweist:
eine Schraubenwelle (612), welche in jedem des ersten und des zweiten Installationsabteils (114a, 114b), die im Gehäuse (114) des Körperteils (110) gebildet sind, bereitgestellt ist, wobei jede Schraubenwelle (612) ein erstes angetriebenes Zahnrad (614) an ihrem zentralen Abschnitt und Gewinde, die jeweilig in unterschiedlichen Richtungen an beiden Seiten um ihren zentralen Abschnitt gebildet sind, hat,
eine Schiebeelement (616), welches an beiden Seiten jeder Schraubenwelle (612) schraubfixiert ist und eine Langnut (616a) in einer Längsrichtung hat, wobei das Gehäuse (114) einen Vorsprung (617) aufweist, welcher im Eingriff mit der Langnut (616a) ist,
eine Führungsrolle (618), welche an einer äußeren Umfangsfläche eines Endabschnitts jedes Schiebeelements (616) fest im Eingriff ist, und für jede Schraubenwelle (612)
einen ersten Motor (620), mit dessen Motorwelle ein Antriebszahnrad (622), welches mit dem ersten angetriebenen Zahnrad (614) im Eingriff ist, fest im Eingriff ist.

2. Vorrichtung gemäß Anspruch 1, wobei in dem dritten Installationsabteil (114c) ein Abtastteil (210) bereitgestellt ist, der einen verschweißten Abschnitt abtastet, der Schienen verbindet.

3. Vorrichtung gemäß Anspruch 2, wobei der Abtastteil (210) aufweist:
ein Führungsrohr (212), welches in einem Paar an beiden Seiten einer inneren Fläche des dritten Installationsabteils (114c) installiert ist und welches ein ausgeschnittenes Loch (212a) hat, welches an seiner unteren Seite gebildet ist,
eine Zahnstange (214), welche an einer inneren Seite des Führungsrohrs (212) im Eingriff ist und von der äußeren Seite des Gehäuses (114) vorsteht, und ein Abtastelement (220) ist an einem Endabschnitt der Zahnstange (214) bereitgestellt, welcher an der äußeren Seite des Gehäuses (114) angeordnet ist, und
einen zweiten Motor (218), welcher in dem ausgeschnittenen Loch (212a) angeordnet ist, welches an der unteren Seite des Führungsrohrs (212) gebildet ist, und eine Motorwelle hat, mit welcher ein Ritzel (216), welches mit der Zahnstange (214) im Eingriff ist, fest im Eingriff ist.

4. Vorrichtung gemäß Anspruch 1, wobei der Radteil (310) aufweist:
eine vordere Radwelle (312), welche in beide Seite-Richtungen vorsteht, nachdem sie das erste Installationsabteil (114a), welches in dem Gehäuse (114) des Körperteils (110) gebildet ist, durchläuft, und ein erstes zusammenwirkendes Zahnrad (314) für eine Position in dem ersten Installationsabteil (114a) hat,
ein erstes Kettenradsegment (316), welches an einem Endabschnitt beider Seiten der vorderen Radwelle (312) installiert ist,
eine hintere Radwelle (320), welches in beide Seite-Richtungen vorsteht, nachdem sie ein zweites Installationsabteil (114b), welches in dem Gehäuse (114) des Körperteils (110) gebildet ist, durchläuft, und ein zweites zusammenwirkendes Zahnrad (322) für eine Installation im zweiten Installationsabteil (114b) hat,
ein zweites Kettenradsegment (324), welches an einem Endabschnitt beider Seiten der hinteren Radwelle (320) installiert ist, und
eine Endlos-Gleiskette (330), welche das erste Kettenradsegment (316) und das zweite Kettenradsegment (324) verbindet.

5. Vorrichtung gemäß Anspruch 4, wobei ein Rahmen (340) an einem äußeren Seitenabschnitt jedes des ersten und des zweiten Kettenradsegments (316, 324) bereitgestellt ist und an dem oberen und dem unteren Abschnitt des Rahmens (340) mehrere Hilfsrollen (342) bereitgestellt sind, welche die inneren Seitenflächen der Endlos-Gleiskette (330) halten.

6. Vorrichtung gemäß Anspruch 1, wobei der Betriebsteil (410) aufweist:
eine erste und eine zweite Antriebswelle (412, 422), welche in dem ersten und dem zweiten Installationsabteil (114a, 114b) des Körperteils (110) bereitgestellt sind, während sie orthogonal zur Oberseite jeder der vorderen Radwelle (312) und der hinteren Radwelle (320) des Radteils (310) sind und welche ein zweites und ein drittes angetriebenes Zahnrad (414, 424) haben, welche mit dem ersten und dem zweiten zusammenwirkenden Zahnrad (314, 322) in Eingriff sind, und
ein erstes und ein zweites angetriebenes Kegelrad (416, 426), welche an der ersten und der zweiten Antriebswelle (412, 422) bereitgestellt sind und im Abstand zu dem zweiten und dem dritten angetriebenen Zahnrad (414, 424) angeordnet sind.

7. Vorrichtung gemäß Anspruch 1, wobei der Antriebskraftübertragungsteil (510) aufweist:
einen dritten und einen vierten Motor (512, 522), welche in dem ersten und dem zweiten Installationsabteil (114a, 114b) des Körperteils (110) installiert sind, und
ein erstes und ein zweites Antriebskegelrad (514, 524), welche mit der Motorwelle des dritten und des vierten Motors (512, 522) fest im Eingriff sind und mit dem ersten und dem zweiten angetriebenen Kegelrad (416, 426), welche in der ersten und der zweiten Antriebswelle (412, 422) des Betriebsteils (410) bereitgestellt sind, im Eingriff sind.

8. Vorrichtung gemäß Anspruch 1, wobei ein Montageloch (616b) an einem Endabschnitt des Schiebeelements (616) gebildet ist und ein elastisches Element (630) in dem Montageloch (616b) montiert ist und eine Kugel (632) an einer vorderen Seite des elastischen Elements (630) montiert ist und eine Befestigungsplatte (634) eingerichtet ist, um das Montageloch (616b) des Schiebeelements (616) zu bedecken und fest im Eingriff zu sein, damit die Kugel (632) nach außen hin vorsteht.

9. Vorrichtung gemäß Anspruch 8, wobei der Körperteil (110) ferner einen Solar-Leistung-Erzeugung-Teil (710) aufweist und der Solar-Leistung-Erzeugung-Teil (710) aufweist:
eine Solar-Zelle-Platte (712), welche an der Oberseite des Abdeckelements (116) bereitgestellt ist, welches an der Oberseite des Gehäuses (114) des Körperteils (110) bereitgestellt ist,
eine Speicherbatterie (714), welche in sowohl dem ersten als auch dem zweiten Installationsabteil (114a, 114b) des Gehäuses (114) installiert ist oder in entweder dem ersten Installationsabteil (114a) oder dem zweiten Installationsabteil (114b) installiert ist, und
ein Lademodul (716), welches in sowohl dem ersten als auch dem zweiten Installationsabteil (114a, 114b) des Gehäuses (114) installiert ist oder in entweder dem ersten Installationsabteil (114a) oder dem zweiten Installationsabteil (114b) installiert ist.

10. Vorrichtung gemäß Anspruch 1, wobei der Körper (112) des Körperteils (110) in einer Vorwärts- und einer Rückwärtsrichtung langgestreckt ist und eine Neigungsplatte (120) an der Oberseite des langgestreckten Körpers (112) installiert ist.

## Revendications

1. Dispositif de détection automatique par ultrasons (100) pour des rails, comprenant :
une partie de corps (110) ;
une partie de roue (310) installée des deux côtés de la partie de corps (110) ;
une partie opérationnelle (410) qui est installée dans la partie de corps (110) et active la partie de roue (310) ; et
une partie de transfert de force d'entraînement (510) transférant une force d'entraînement à la partie opérationnelle (410) ;
**caractérisé en ce que** le dispositif de détection automatique par ultrasons (100) comprend :
un corps en forme de plaque (112) qui est espacé du sol ;
un boîtier (114) qui est installé au sommet du corps (112) et est divisé par une cloison et est formé de premier et deuxième compartiments d'installation (114a, 114b) formés aux extrémités avant et arrière pour installer la partie opérationnelle (410) et la partie de transfert d'énergie d'entraînement (510), et un troisième compartiment d'installation (114c) formé entre les premier et deuxième compartiments d'installation (114a, 114b) ;
une sonde à ultrasons installée dans ledit troisième compartiment d'installation (114c) ;
un élément de couvercle (116) recouvrant les premier, deuxième et troisième compartiments d'installation (114a, 114b, 114c) du boîtier (114) ;
la partie de corps (110) comprenant en outre une partie de support (610) supportée par les rails, dans lequel la partie de support (610) comprend :
une tige de vis (612) qui est fournie dans chacun des premier et deuxième compartiments d'installation (114a, 114b) formés dans le boîtier (114) de la partie de corps (110), chaque tige de vis (612) présentant un premier engrenage entraîné (614) au niveau de sa partie centrale et des filets formés chacun dans différentes directions des deux côtés autour de sa partie centrale ;
un élément coulissant (616) qui est fixé par filets des deux côtés de chaque tige de vis (612) et présente une longue rainure (616a) dans une direction longitudinale, le boîtier (114) comprenant une saillie (617) qui vient en prise dans la longue rainure (616a) ;
un rouleau de guidage (618) qui vient en prise de manière fixe au niveau d'une surface circonférentielle extérieure d'une partie d'extrémité de chaque élément coulissant (616) ; et pour chaque tige de vis (612), un premier moteur (620) dont l'arbre de moteur est mis en prise de manière fixe avec un engrenage d'entraînement (622) mis en prise avec le premier engrenage entraîné (614).

2. Dispositif selon la revendication 1, dans lequel, dans le troisième compartiment d'installation (114c), est prévue une partie de balayage (210) balayant une partie soudée reliant des rails.

3. Dispositif selon la revendication 2, dans lequel la partie de balayage (210) comprend :
un tuyau de guidage (212) installé en une paire des deux côtés d'une surface intérieure du troisième compartiment d'installation (114c) et présentant un trou découpé (212a) formé sur son côté inférieur ;
une crémaillère (214) qui vient en prise au niveau d'un côté intérieur du tuyau de guidage (212) et fait saillie à partir du côté extérieur du boîtier (114), et un élément de balayage (220) est fourni au niveau d'une partie d'extrémité de la crémaillère (214) positionnée au niveau du côté extérieur du boîtier (114) ; et un deuxième moteur (218) qui est positionné dans le trou découpé (212a) formé au niveau du côté inférieur du tuyau de guidage (212) et présente un arbre de moteur dont un pignon (216) mis en prise avec la crémaillère (214) est mis en prise de manière fixe.

4. Dispositif selon la revendication 1, dans lequel la partie de roue (310) comprend :
un arbre de roue avant (312) qui fait saillie dans les deux directions latérales après qu'il ait traversé le premier compartiment d'installation (114a) formé dans le boîtier (114) de la partie de corps (110) et présente un premier engrenage coopérant (314) pour une position dans le premier compartiment d'installation (114a) ;
un premier segment de roue dentée (316) installé au niveau d'une partie d'extrémité des deux côtés de l'arbre de roue avant (312) ;
un arbre de roue arrière (320) qui fait saillie dans les deux directions latérales après qu'il ait traversé un deuxième compartiment d'installation (114b) formé dans le boîtier (114) de la partie de corps (110) et présente un second engrenage coopérant (322) pour une installation dans le deuxième compartiment d'installation (114b) ;
un second segment de roue dentée (324) installé au niveau d'une partie d'extrémité des deux côtés de l'arbre de roue arrière (320) ; et
une chaîne sans fin (330) reliant le premier segment de roue dentée (316) et le second segment de roue dentée (324).

5. Dispositif selon la revendication 4, dans lequel un cadre (340) est prévu sur une partie latérale extérieure de chacun des premier et second segments de roue dentée (316, 324), et au niveau des parties supérieure et inférieure du cadre (340) sont prévus une pluralité de rouleaux auxiliaires (342) supportant les surfaces latérales intérieures de la chaîne sans fin (330).

6. Dispositif selon la revendication 1, dans lequel la partie opérationnelle (410) comprend :
des premier et second arbres d'entraînement (412, 422) qui sont prévus dans les premier et deuxième compartiments d'installation (114a, 114b) de la partie de corps (110) lorsqu'ils sont perpendiculaires au sommet de chacun de l'arbre de roue avant (312) et de l'arbre de roue arrière (320) de la partie de roue (310) et qui présentent des deuxième et troisième engrenages entraînés (414, 424) venant en prise avec les premier et second engrenages coopérants (314, 322) ; et
des premier et second engrenages coniques entraînés (416, 426) qui sont fournis au niveau des premier et second arbres d'entraînement (412, 422) et sont espacés des deuxième et troisième engrenages entraînés (414, 424).

7. Dispositif selon la revendication 1, dans lequel la partie de transfert de force d'entraînement (510) comprend :
des troisième et quatrième moteurs (512, 522) qui sont installés dans les premier et deuxième compartiments d'installation (114a, 114b) de la partie de corps (110) ; et
des premier et second engrenages coniques d'entraînement (514, 524) qui viennent en prise de manière fixe avec les arbres de moteur des troisième et quatrième moteurs (512, 522) et qui viennent en prise avec les premier et second engrenages coniques entraînés (416, 426) fournis dans les premier et second arbres d'entraînement (412, 422) de la partie opérationnelle (410).

8. Dispositif selon la revendication 1, dans lequel un trou de montage (616b) est formé au niveau d'une partie d'extrémité de l'élément coulissant (616), et un élément élastique (630) est monté dans le trou de montage (616b), et une bille (632) est montée au niveau d'un côté avant de l'élément élastique (630), et une plaque de fixation (634) est configurée pour recouvrir le trou de montage (616b) de l'élément coulissant (616) et pour venir en prise de manière fixe pour que la bille (632) fasse saillie vers l'extérieur.

9. Dispositif selon la revendication 8, dans lequel la partie de corps (110) comprend en outre une partie de génération d'énergie solaire (710), et la partie de génération d'énergie solaire (710) comprend :
une plaque de cellule solaire (712) fournie au sommet de l'élément de couvercle (116) fourni au sommet du boîtier (114) de la partie de corps (110) ;
une batterie de stockage (714) qui est installée à la fois dans les premier et deuxième compartiments d'installation (114a, 114b) du boîtier (114) ou qui est installée dans le premier compartiment d'installation (114a) ou dans le second compartiment d'installation (114b) ; et
un module de charge (716) qui est installé à la fois dans les premier et deuxième compartiments d'installation (114a, 114b) du boîtier (114) ou qui est installé dans le premier compartiment d'installation (114a) ou dans le deuxième compartiment d'installation (114b).

10. Dispositif selon la revendication 1, dans lequel le corps (112) de la partie de corps (110) est prolongé dans des directions vers l'avant et vers l'arrière, et une plaque en pente (120) est installée au sommet du corps prolongé (112).
